# EUROPEAN PATENT APPLICATION

(11) **EP 3 115 432 A1**
(43) Date of publication of application: **11.01.2017**
(21) Application number: 15290175.7
(22) Date of filing: 07.07.2015
(51) Int. Cl.: C09K 8/487, C09K 8/493, C04B 28/04

(54) **WELL CEMENTING COMPOSITIONS AND METHODS**

(71) Applicant: Services Pétroliers Schlumberger, 75007 Paris (FR); Schlumberger Holdings Limited, Road Town, Tortola 1110 (VG); Schlumberger Technology B.V., 2514 JG The Hague (NL)
(72) Inventor: Michaux, Michel, 92140 Clamart (FR); Caritey, Jean-Philippe, 92140 Clamart (FR); Beaudy, Pierre, 92140 Clamart (FR)
(74) Representative: Rzaniak, Martin

(57) **Abstract**

Cement slurry compositions comprising water, portland cement, styrene-butadiene latex and polystyrene sulfonate exhibit improved stability (i.e., lower free fluid values). The slurries may further comprise bentonite, attapulgite, sepiolite, laponite, zeolites, colloidal silica, microsilica or silica fume or combinations thereof. Such compositions may be used for well cementing operations. The operations may be primary cementing or remedial cementing.

## Description

### BACKGROUND

The statements in this section merely provide background information related to the present disclosure and may not constitute prior art.

The present disclosure broadly relates to compositions and methods for cementing subterranean wells. In particular, the disclosure is aimed at compositions and methods for controlling annular fluid migration.

Annular fluid migration during drilling or well-completion procedures has long been recognized as one of the most troublesome problems of the petroleum industry. It is defined as the invasion of formation fluids into the annulus owing to a pressure imbalance at the formation face. The fluids may migrate to a lower pressure zone, or to the surface. Gas migration is the most common form of annular fluid migration.

Gas migration - also called gas communication or gas leakage, annular gas flow, gas channeling, flow after cementing or gas invasion - is a problem for both gas-producing or gas-storage wells. The severity of the problem ranges from the most hazardous (e.g., a blowout situation arising from a severe pressure imbalance during drilling or cementing) to the most marginal (e.g., a residual sustained casing pressure at the wellhead). In addition to surface related difficulties, hydraulic communication between two or more subsurface zones can occur. Such problems are more difficult to detect. In such cases, gas production may be impaired, gas may be diverted to upper depleted zone (possibly followed by gas migration to the surface through another well), or the efficiency of stimulation treatments may be reduced.

Gas migration is a complex process that is influenced by many factors, including fluid density control, mud removal, cement slurry properties, cement hydration, and interactions between the cement, casing, and formation. The oil and gas industry first recognized gas migration in the early 1960s, when major gas-communication problems occurred in gas storage wells in the United States. Since then, the industry has worked diligently to understand the problem and find solutions.

Annular gas migration has at least three root causes: (1) the hydrostatic pressure in the annulus falls to a level that is lower than or equal to the pore pressure of a gas-bearing zone; (2) sufficient space exists in the annulus to allow gas entry; and (3) a path in the annulus allows gas migration. The cement slurry properties may influence each of the root causes.

Insufficient fluid-loss control may affect these three root causes. A decrease in annular pressure may occur due to annular bridging, lowering of hydrostatic pressure in the cement column or a decrease in the height of the cement column.

The cement slurry's rheological properties are parameters that are relevant to annular fluid migration. For example thixotropy or gelation of the slurry may lower the hydrostatic pressure in the annulus and interfere with the ability of fluid-loss additives to function.

Cement shrinkage also contributes to gas migration. A contraction of the slurry may occur as the cement hydrates because the volume of the hydration products is lower than that of the initial reactants. As a result, the annular pressure may be affected.

As a cement slurry begins to set, the matrix permeability may be as high as 300 mD. Under these circumstances, pores may interconnect and create a pathway through which gas may migrate through the cement matrix.

Free fluid, or separation of a portion of the aqueous phase of a slurry from the suspended solids, may also provide a pathway for gas to escape into the annulus. This phenomenon is particularly problematic in deviated wells, along which a continuous channel of free fluid may form.

One industry response to the gas migration challenge has been to develop cement additives to mitigate the aforementioned problems. Such additives include fluid-loss control agents, gas migration control agents (e.g., latexes and microgels) and materials that minimize the period of transition between a liquid slurry and a set cement.

### SUMMARY

The present disclosure reveals compositions and methods by which cement slurries with reduced free fluid values may be prepared and employed for cementing subterranean wells.

In an aspect, embodiments relate to methods for preparing a first portland cement slurry. A mixture is prepared that contains water, portland cement, styrene-butadiene latex and polystyrene sulfonate. The composition is sheared until the composition is homogeneous, thereby forming the first slurry.

In a further aspect, embodiments relate to methods for cementing a subterranean well. A first slurry is prepared that includes water, portland cement, styrene-butadiene latex and polystyrene sulfonate. The composition is sheared until the composition is homogeneous, thereby forming the first slurry. The first slurry is then placed in the subterranean well.

In yet a further aspect, embodiments relate to methods for preventing annular fluid migration in a subterranean well. A first slurry is prepared that includes water, portland cement, styrene-butadiene latex and polystyrene sulfonate. The composition is sheared until the composition is homogeneous, thereby forming the first slurry. The first slurry is then placed in the well and allowed to set.

### DETAILED DESCRIPTION

At the outset, it should be noted that in the development of any such actual embodiment, numerous implementation-specific decisions are made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand, that any and all data points within the range are to be considered to have been specified, and that inventors possessed knowledge of the entire range and all points within the range.

Applicant has determined that the addition of polystyrene sulfonate (PSS) increases the plastic viscosity and yield stress of cement slurries that contain concentrations of styrene-butadiene latex (SBL) between 100L/tonne and 500 L/tonne. Such latexes are useful as additives for preventing annular fluid migration. The addition of PSS minimizes the free fluid that may occur when latex slurries are over-dispersed (i.e., the yield stress is close to zero). Such over-dispersion may occur when latex cement slurries contain high retarder concentrations, notably for high temperature applications. The plastic viscosity may increase by up to about 320% and the yield stress may increase by up to about 4500%. This behavior was not expected because PSS has an opposite effect in slurries that do not contain SBL. In other words, PSS has a dispersing effect in SBL-free slurries. Applicant further determined that other sulfonated polymers such as polynaphthalene sulfonate, polymelamine sulfonate and lignosulfonates-also known cement-slurry dispersants-did not have the same effect as PSS.

In an aspect, embodiments relate to methods for preparing a first portland cement slurry. A mixture is prepared that comprises water, portland cement, SBL and PSS. The composition is sheared until the composition is homogeneous, thereby forming the first slurry.

In a further aspect, embodiments relate to methods for cementing a subterranean well. A composition is prepared that comprises water, portland cement, SBL and PSS. The composition is sheared until the composition is homogeneous, thereby forming a first slurry. The first slurry is then placed in the well. The cement slurry may be placed during a primary cementing operation or a remedial cementing operation.

In yet a further aspect, embodiments relate to methods for preventing annular fluid migration in a subterranean well. A composition is prepared that comprises water, portland cement, styrene-butadiene latex and polystyrene sulfonate. The composition is sheared until the composition is homogeneous, thereby forming a first slurry. Such slurry preparation may occur at the surface with either batch mixing or continuous mixing equipment as is known in the art. A complete description of the design and operation of cement mixing equipment may be found in the following publication: Leugemors E, Metson J, Pessin, J-L, Colvard RL, Krauss CD and Plante M: "Cementing Equipment and Casing Hardware," in Nelson EB and Guillot D: Well Cementing-Second Edition, Houston, Schlumberger (2006). The first slurry is then placed in the subterranean well and allowed to set. The cement slurry may be placed during a primary cementing operation or a remedial cementing operation. During a primary cementing operation, the slurry may be pumped down the casing interior and up the annulus between the casing and the formation (or another casing string). Or, the slurry may be pumped down the annulus. During a remedial cementing operation, the slurry may be pumped downhole or lowered in to the wellbore inside a dispensing device such as a dump bailer.

For all aspects, the PSS may have a molecular weight between 5,000 and 2,000,000 Da. The PSS may have a molecular weight between 200,000 and 1,000,000 Da. The PSS may have a molecular weight between 250,000 and 1,000,000 Da.

For all aspects, the PSS may be present at a concentration between 0.05% and 5.0% by weight of cement (BWOC). The PSS may be present at a concentration between 0.1% and 2.0% BWOC. The PSS may be present at a concentration between 0.2% and 1.0% BWOC.

For all aspects, the SBL may be present at a concentration between 100 L/tonne and 500 L/tonne of cement. The SBL may be present at a concentration between 100 L/tonne and 300L/tonne. The SBL may be supplied as a liquid suspension containing 45% latex solids.

For all aspects, the first cement slurry may have a density between 1,200 kg/m³ and 2,700 kg/m³. The first cement slurry may have a density between 1,600 kg/m³ and 2,700 kg/m³. The first cement slurry may have a density between 1,800 kg/m³ and 2,700 kg/m³.

For all aspects, the first cement slurry may further comprise bentonite, attapulgite, sepiolite, laponite, zeolites, colloidal silica, microsilica or silica fume or combinations thereof. The concentrations of these materials may vary between 0.2% BWOC and 2.0% BWOC, or between 0.5% BWOC and 1.0% BWOC.

For all aspects, the first cement slurry may have a free fluid value that is up to 100% lower than that of a second slurry having the same or similar composition as the first slurry, except that the polystyrene sulfonate is absent in the second cement slurry.

For all aspects, the first or second cement slurry may further comprise accelerators, retarders, dispersants, fluid-loss additives, extenders, weighting agents, lost-circulation control agents, antifoam agents or gas generating agents or combinations thereof. Further information concerning these materials may be found in the following publication: Nelson EB, Michaux M and Drochon B: "Cement Additives and Mechanisms of Action," in Nelson EB and Guillot D (eds): Well Cementing-Second Edition, Houston, Schlumberger (2006).

For all aspects, the first or second cement slurry may be pumpable. The slurry viscosity may be lower than 1,000 cP at a shear rate of 1,000 s⁻¹ throughout the temperature range to which the slurry is exposed during placement.

The following examples serve to further illustrate the disclosure.

### EXAMPLES

All of the tests described herein were conducted in accordance with recommended procedures published by the American Petroleum Institute (API). See RP10-B.

Dyckerhoff Class G cement was used during the experiments presented herein. Tap water was used as the mixing fluid. With the exception of silica flour (which was dry blended with the cement), all of the cement additives were incorporated into the mixing fluid. The slurry density for all experiments was 1893 kg/m³.

The effects of two high-temperature retarders were also evaluated in the following Examples. The first retarder was a phosphonate/borate blend (P/B). The second retareder was blend of lignin amine/sodium glucoheptonate (L/G) and lignosulfonate/sodium gluconate/tartaric acid (L/G/T).

The cement slurries were prepared in a Waring blender according to the API procedure and then conditioned for 30 min at 85°C in an atmospheric consistometer. Rheological properties of the slurries were measured at 85°C using a CHAN 35 rotational viscometer, available from Chandler Engineering, Tulsa, OK, USA. The plastic viscosity (PV) and yield stress (Ty) were calculated using the Bingham model.

Following the 30-min conditioning period, the cement slurry was poured into a vertical 250-mL graduated cylinder and placed in an oven for 2 hours at 85°C. During the test period, slurry instability is indicated by the volume of supernatant fluid (or free fluids) that appears at the top of the cylinder. The volume of free fluid is expressed as a volume percentage. Ideally, the free fluid result should be 0%.

### EXAMPLE 1

The effects of two high-temperature retarders (phosphonate/borate [PB] and lignin amine/sodium glucoheptonate [L/G] + lignosulfonate/sodium gluconate/tartaric acid [L/G/T]) on the rheological properties and stability (i.e., free fluid) of a cement slurry formulated with 266 liters of SBL per tonne of cement is shown in Table 1. The cement blend also contained 4.44 L/tonne silicone antifoam agent and 35% BWOC silica flour.

**Table 1. Effect of high temperature retarders on the rheological properties and free fluid of a cement slurry formulated with SBL. * 88.8 L/tonne of cement; ** 0.4% BWOC L/G, 0.4% BWOC L/G/T.**

| Retarder | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| - | 176 | 115 | 58 | 35 | 18.5 | 4.5 | 2.5 | 174 | 0.3 | - |
| PB* | 31 | 20 | 10 | 7 | 3 | 2 | 1 | 30 | 0.3 | 10.8 |
| L/G + | | | | | | | | | | |
| L/G/T** | 25 | 16 | 9 | 6 | 4 | 2 | 1 | 23 | 0.7 | 7.2 |

The plastic viscosity of the cement slurry that did not contain any retarder was 174 mPa.s, but the slurry was well dispersed (Ty = 0.3 Pa). The plastic viscosities of the cement slurries retarded with either the PB retarder or the blend of L/G and L/G/T were 83% and 86% lower, respectively. The slurries were well dispersed (Ty close to zero). In both cases the amount of free fluid was above 1%. The ideal result would be 0%.

### EXAMPLE 2

The effects of PSS on the rheological properties and stability of the cement slurry of Example 1, formulated with the SBL (and the P/B retarder) are shown in Table 2.

**Table 3. Effect of PSS (VERSA-TL.70) on the rheological properties and free fluid of a cement slurry formulated with SBL latex and a P/B retarder.**

| VERSA-TL 70 (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 31 | 20 | 10 | 7 | 3 | 2 | 1 | 30 | 0.3 | 10.8 |
| 0.5 | 40 | 29 | 17 | 12 | 8 | 5 | 4.5 | 36 | 2.4 | 8.8 |
| 1.0 | 66 | 48 | 30 | 21.5 | 13 | 8 | 6 | 58 | 4.5 | 4 |
| 1.5 | 101 | 77 | 53 | 43 | 34 | 24 | 21.5 | 74 | 13.3 | 0.6 |

The plastic viscosity and yield stress increased by as much as 147% and 1300%, respectively, when the concentration of PSS was increased. The free fluid value decreased by as much as 94%. These experimental data show that low molecular-weight PSS does not act as a dispersant in cement slurries formulated with SBL. Actually an opposite effect was noted (i.e., increase of Ty versus PSS concentration).

### EXAMPLE 3

The effect of high molecular weight PSS (VERSA-TL 502, available from Akzo Nobel) on the rheology and stability of the cement slurry formulated with SBL and PB retarder is shown in Table 3. The average molecular weight of VERSA-TL 502 is about 1,000,000 Da. The base slurry contained 35% (BWOC) silica flour, 4.44 L/tonne silicone antifoam agent, 266 L/tonne SBL and 88.8 L/tonne PB retarder.

**Table 3. Effect of high molecular weight PSS on the rheological properties and free fluid of a cement slurry formulated with SBL and a P/B retarder.**

| VERSA-TL 502 (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 31 | 20 | 10 | 7 | 3 | 2 | 1 | 30 | 0.3 | 10.8 |
| 0.3 | 80 | 57 | 31 | 24 | 19 | 9 | 8 | 70 | 4.8 | 4.4 |
| 0.5 | 86 | 65 | 41 | 31 | 22 | 16 | 15 | 71 | 7.9 | 0.4 |
| 0.7 | 147 | 107 | 70 | 54 | 40 | 28 | 26 | 118 | 13.9 | 0 |

The experimental results were similar to those obtained with low molecular-weight PSS (i.e., VERSA-TL 70) (Table 3). When the concentration of VERSA-TL 502 PSS was increased, the plastic viscosity of cement slurry increased by as much as 293% and the yield value increased by as much as 4500%. The free fluid value decreased by as much as 100%. However, lower concentrations of polymer were needed to obtain the same effect.

### EXAMPLE 4

The effect of VERSA-TL 502 on the rheological properties and free fluid of a slurry formulated with SBR and a retarder composed of L/G and L/G/T is shown in Table 4. The base slurry contained 35% (BWOC) silica flour, 4.44 L/tonne silicone antifoam agent, 266 L/tonne SBL, 0.4% BWOC L/G retarder and 0.4% BWOC L/G/T retarder.

**Table 4. Effect of high molecular weight PSS on the rheological properties and free fluid of a cement slurry formulated with SBL and a L/G + L/G/T retarder blend.**

| VERSA-TL 502 (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 25 | 16 | 9 | 6 | 4 | 2 | 1 | 23 | 0.7 | 7.2 |
| 0.3 | 95 | 61 | 31 | 20 | 10 | 1 | 0.5 | 94 | 0.1 | 0.8 |
| 0.5 | 106 | 76 | 47 | 34 | 23 | 10 | 7 | 91 | 7.3 | Trace |
| 0.7 | 122 | 93 | 59 | 44 | 30 | 15 | 12 | 97 | 12.4 | 0 |

Again, it can be seen that the yield stress of cement slurry could be increased and the free fluid could be eliminated by adding small concentrations of high molecular-weight PSS. The plastic viscosity increased by as much as 321% and the yield stress increased by as much as 86% or increased by as much as 1670%. The free fluid value decreased by as much as 100%.

### EXAMPLE 5

The effect of adding sepiolite to a slurry formulated with PSS and SBL is shown in Table 5. The base slurry contained 35% (BWOC) silica flour, 4.44 L/tonne silicone antifoam agent, 266 L/tonne SBL, 133.2 L/tonne P/B retarder, 0.8% BWOC L/G/T retarder and 0.3% BWOC VERSA-TL 502.

**Table 5. Effect of sepiolite on the rheological properties and free fluid of a cement slurry formulated with PSS and SBL.**

| Sepiolite (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 50 | 36 | 20 | 14 | 8 | 4 | 2 | 47 | 2.1 | 4.8 |
| 0.5 | 67 | 47 | 27 | 19 | 12 | 6 | 5 | 62 | 2.2 | 1.2 |
| 1 | 79 | 59 | 37 | 27 | 19 | 12 | 11 | 69 | 4.9 | 0 |

The results show that sepiolite works in concert with the PSS to reduce free fluid. The free fluid value decreased by as much as 100%. The plastic viscosity and yield stress increased by as much as 47% and 133%.

### EXAMPLE 6

The effect of adding bentonite to a slurry formulated with PSS and SBL is shown in Table 6. The base slurry contained 35% (BWOC) silica flour, 4.44 L/tonne silicone antifoam agent, 266 L/tonne SBL, 133.2 L/tonne P/B retarder, 0.8% BWOC L/G/T retarder and 0.3% BWOC VERSA-TL 502.

**Table 6. Effect of bentonite on the rheological properties and free fluid of a cement slurry formulated with PSS and SBL.**

| Bentonite (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 50 | 36 | 20 | 14 | 8 | 4 | 2 | 47 | 2.1 | 4.8 |
| 0.5 | 62 | 43 | 24 | 16 | 10 | 4 | 2 | 58 | 2.2 | 0 |

The results show that bentonite works in concert with the PSS to reduce free fluid. The free fluid value decreased by 100%. The plastic viscosity and yield stress increased by 23% and 5%, respectively.

### EXAMPLE 7

The effect of adding colloidal silica to a slurry formulated with PSS and SBL is shown in Table 7. The base slurry contained 35% (BWOC) silica flour, 4.44 L/tonne silicone antifoam agent, 266 L/tonne SBL, 133.2 L/tonne PB retarder, 0.8% BWOC L/G/T retarder and 0.3% BWOC VERSA-TL 502.

**Table 7. Effect of colloidal silica on the rheological properties and free fluid of a cement slurry formulated with PSS and SBL.**

| Colloidal Silica (L/tonne) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 50 | 36 | 20 | 14 | 8 | 4 | 2 | 47 | 2.1 | 4.8 |
| 8.88 | 59 | 42 | 24 | 17 | 11 | 5 | 4 | 54 | 2.6 | 0 |

The results show that colloidal silica works in concert with the PSS to reduce free fluid. The free fluid value decreased by 100%. The plastic viscosity and yield stress increased by 15% and 11%, respectively.

Examples 5-7 also show that the addition of sepiolite, bentonite or colloidal silica allows one to reduce free fluid and minimize the cement slurry viscosity increase.

### COMPARATIVE EXAMPLE 1

The dispersing effect of a low molecular weight PSS (VERSA-TL 70, available from Akzo Nobel) on a cement slurry that does not contain SBL is shown in Table 8. The average molecular weight of VERSA-TL 70 is about 75,000 Da. The slurry also contained polypropylene glycol antifoam agent at a concentration of 2.66 L/tonne of cement.

**Table 8. Effect of PSS (VERSA-TL 70) on the rheological properties and free fluid of a cement slurry formulated without SBL.**

| VERSA-TL 70 (% BWOC) | CHAN 35 Dial Reading (rpm) | | | | | | | Plastic Viscosity (mPa.s) | Yield Stress (Pa) | Free Fluid (%) |
|---|---|---|---|---|---|---|---|---|---|---|
| | 300 | 200 | 100 | 60 | 30 | 6 | 3 | | | |
| 0 | 98 | 91 | 79 | 72 | 49 | 19 | 11 | 33 | 32.0 | 1.6 |
| 0.3 | 64 | 60 | 56 | 53 | 43 | 20 | 16 | 13 | 24.5 | 1.6 |
| 0.5 | 32 | 30 | 29 | 28 | 27 | 18 | 15 | 5 | 13.1 | 1.6 |
| 0.7 | 23 | 17 | 11 | 8 | 7 | 6 | 5 | 18 | 2.4 | 1.6 |

The yield stress (Ty) and plastic viscosity (PV) of the cement slurry decreased when the concentration of Versa-TL 70 was increased. The cement slurry was well dispersed (i.e., Ty close to zero) when 0.7% by weight of cement (BWOC) of VERSA-TL 70 was added to the cement slurry. The amount of free fluid was 1.6% (i.e., 4 mL of free fluid in the 250-mL graduated cylinder) for each of the cement slurries.

These experimental data confirm that low molecular-weight PSS acts as a dispersant of cement slurries that do not contain SBL.

### COMPARATIVE EXAMPLE 2

The effect of polynapthalene sulfonate (PNS) on the rheological properties and stability of the cement slurry of Table 2 formulated with SBL latex and the P/B retarder is shown in Table 9.

**Table 9. Effect of PNS on the rheological properties and free fluid of a cement slurry formulated with SBL latex and a P/B retarder.**

| PNS (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 31 | 20 | 10 | 7 | 3 | 2 | 1 | 30 | 0.3 | 10.8 |
| 0.2 | 43 | 30 | 16 | 10 | 6 | 2 | 1 | 42 | 0.8 | 24.8 |
| 0.5 | 18 | 12 | 6 | 4 | 2 | 1 | 0 | 18 | 0.2 | 28.0 |

The cement slurry formulated with 0.2% BWOC PNS was slightly more viscous than the PNS-free cement slurry, but its yield stress remained very low (0.8 Pa). The amount of free fluid was much higher-24.8% against 10.8%.

The cement slurry formulated with 0.5% BWOC PNS was less viscous and its yield stress was very low (0.2 Pa). The amount of free fluid was 28%.

These experimental data show that PNS does not behave in the same manner as low molecular-weight PSS (i.e., VERSA-TL 70) in cement slurries formulated with SBL.

### COMPARATIVE EXAMPLE 3

The effect of polymelamine sulfonate (PMS) on the rheology and stability of the cement slurry of Example 1 formulated with SBL and the P/B retarder is shown in Table 10.

**Table 10. Effect of PMS on the rheological properties and free fluid of a cement slurry formulated with SBL and a P/B retarder.**

| PMS (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 31 | 20 | 10 | 7 | 3 | 2 | 1 | 30 | 0.3 | 10.8 |
| 0.5 | 59 | 40 | 20 | 11 | 7 | 3 | 2 | 58 | 0.5 | 11.2 |
| 1.0 | 32 | 21 | 10 | 6 | 3 | 2 | 1 | 31 | 0.2 | 7.2 |
| 1.5 | 38 | 25 | 12 | 8 | 4 | 2 | 1 | 37 | 0.3 | 8.8 |

The cement slurry formulated with 0.5% BWOC PMS was more viscous than the PMS-free cement slurry, but its yield stress remained very low (0.5 Pa). The amount of free fluid was similar: 11.2% against 10.8%. The viscosity and yield stress of the cement slurries formulated with 1% or 1.5% BWOC PMS were similar to those of PMS-free cement slurry. The amount of free fluid remained high: 7.2% and 8.8%.

These experimental data show that PMS does not increase the yield stress of the cement slurries formulated with SBL. As a consequence, the free fluid was not eliminated.

### COMPARATIVE EXAMPLE 4

The effect of lignosulfonate (LS) on the rheology and stability of the cement slurry of Example 1 formulated with SBL and P/B retarder is shown in Table 11.

**Table 11. Effect of LS on the rheological properties and free fluid of a cement slurry formulated with SBL and a P/B retarder.**

| LS (% BWOC) | CHAN 35 Dial Reading (rpm) | | | | | | | PV (mPa.s) | Ty (Pa) | Free Fluid (%) |
|---|---|---|---|---|---|---|---|---|---|---|
| | 300 | 200 | 100 | 60 | 30 | 6 | 3 | | | |
| 0 | 31 | 20 | 10 | 7 | 3 | 2 | 1 | 30 | 0.3 | 10.8 |
| 0.5 | 81 | 49 | 25 | 16 | 9 | 4 | 3 | 77 | 0.6 | 27.2 |
| 1.0 | 28 | 20 | 11 | 7 | 4 | 2 | 1 | 27 | 0.8 | 28.0 |

The plastic viscosity of the cement slurry formulated with 0.5% BWOC LS was higher than that of the LS-free cement slurry, but its yield stress remained very low (0.6 Pa). The amount of free fluid was much higher: 27.2% against 10.8%. The cement slurry formulated with 1% BWOC LS was less viscous than with 0.5% BWOC LS, and its yield stress remained low (0.8 Pa). The amount of free fluid was similar: 28%.

These experimental data show that the addition of lignosulfonate to the cement slurries formulated with styrene-butadiene latex does not increase the yield stress of slurry and does not prevent the appearance of free fluid.

Although various embodiments have been described with respect to enabling disclosures, it is to be understood that this document is not limited to the disclosed embodiments. Variations and modifications that would occur to one of skill in the art upon reading the specification are also within the scope of the disclosure, which is defined in the appended claims.

## Claims

1. A method for preparing a first portland cement slurry, comprising:
(i) preparing a mixture comprising water, portland cement, a styrene-butadiene latex and polystyrene sulfonate; and
(ii) shearing the composition until the composition is homogeneous, thereby forming the first slurry.

2. The method of claim 1, wherein the polystyrene sulfonate has a molecular weight between 5,000 and 2,000,000 Da.

3. The method of claim 1 or 2, wherein the polystyrene sulfonate is present at a concentration between 0.5% and 5.0% by weight of cement.

4. The method of any one of claims 1-3, wherein the styrene-butadiene latex is present at a concentration between 100 L/tonne of cement and 500 L/tonne of cement.

5. The method of any one of claims 1-4, wherein the first cement slurry has a density between 1,800 kg/m³ and 2,700.kg/m³.

6. The method of any one of claims 1-5, wherein the first cement slurry further comprises bentonite, attapulgite, sepiolite, laponite, zeolites, colloidal silica, microsilica or silica fume or combinations thereof.

7. The method of any one of claims 1-6, wherein the first cement slurry has a free fluid value that is up to 100% lower than that of a second cement slurry, the second cement slurry having a same or similar composition as the first slurry except that the polystyrene sulfonate is absent in the second cement slurry.

8. A method for cementing a subterranean well, comprising:
(i) preparing a mixture comprising water, portland cement, styrene-butadiene latex and polystyrene sulfonate;
(ii) shearing the composition until the composition is homogeneous, thereby forming the first slurry; and
(iii) placing the first slurry in the subterranean well.

9. The method of claim 8, wherein the polystyrene sulfonate has a molecular weight between 5,000 and 2,000,000 Da.

10. The method of claim 8 or 9, wherein the polystyrene sulfonate is present at a concentration between 0.5% and 5.0% by weight of cement.

11. The method of any one of claims 8-10, wherein the styrene-butadiene latex is present at a concentration between 100 L/tonne of cement and 500 L/tonne of cement.

12. The method of any one of claims 8-11, wherein the cement slurry has a density between 1,800 kg/m³ and 2,700 kg/m³.

13. The method of any one of claims 8-12, wherein the cement slurry further comprises bentonite, attapulgite, sepiolite, laponite, zeolites, colloidal silica, microsilica or silica fume or combinations thereof.

14. The method of any one of claims 8-13, wherein the first cement slurry has a free fluid value that is up to 100% lower than that of a second cement slurry, the second cement slurry having a same or similar composition as the first slurry except that the polystyrene sulfonate is absent in the second cement slurry.

15. The method of any one of claims 8-14, wherein the cement slurry is placed during a primary cementing operation or a remedial cementing operation.
